# EUROPEAN PATENT APPLICATION

(11) **EP 4 295 990 A1**
(43) Date of publication of application: **27.12.2023**
(21) Application number: 22425028.2
(22) Date of filing: 24.06.2022
(51) Int. Cl.: B23P 6/00, F01D 5/00, F01D 5/20, B23K 26/03

(54) **METHOD FOR REPAIRING BLADES OF GAS TURBINE ENGINES**

(71) Applicant: ANSALDO ENERGIA S.p.A., 16152 Genova (IT)
(72) Inventor: Tipa, Dario, 16152 GENOVA (IT); Gabrielli, Alessio, 16152 GENOVA (IT)
(74) Representative: Studio Torta S.p.A.

(57) **Abstract**

A method for repairing a gas turbine engine blade (1) having an airfoil (2) and an original tip plate (3) arranged to close the airfoil (2) includes removing a tip section (2b) of the blade (1), to such an extent that damaged portions are eliminated, the tip section (2b) including the original tip plate (3) ; forming at least one intermediate tip plate (10; 110), having a thickness lower than a thickness of the original tip plate (3); welding the intermediate tip plate (10; 110) to the airfoil (2); and building a replacement tip plate (18: 118) from the at least one intermediate tip plate (10; 110) by Laser Metal Deposition using a Laser Metal Deposition head (8). Welding includes using the Laser Metal Deposition head (8).

## Description

### TECHNICAL FIELD

The present invention relates to a method for repairing blades of gas turbine engines.

### BACKGROUND

As is known, turbine blades of gas turbine engines continuously undergo severe operating conditions, that include high temperature (even above 1000 °C), huge thermal expansion cycles and mechanical stress caused e.g. by centrifugal force, undesired vibration modes and different thermal expansion of components. Also, different thermal expansion may lead to rubbing of rotary and stationary components during startup transients. As a result of the above and other causes, turbine blades may suffer damages, such as cracks, oxidations, thermo-mechanical fatigue (TMF), creep, especially at the tip region. Quite often, however, damages are not so serious that a whole blade must be replaced and repair methods have been provided.

Some known methods exploit also additive manufacturing techniques, which are flexible and may be adapted to a wide range of interventions. Nevertheless, some limitations remain, especially when additive manufacturing techniques are to be combined with conventional steps, such as laser welding. Welding defects at junctions and corners may be present and cause critical concentration of force, which may lead to a new failure of the blade structure in short time. On the other hand, different tools are required for different steps of the method that involve additive manufacturing and laser welding. However, cost of laser welding and additive manufacturing tools is high and providing all necessary equipment may be extremely expensive. Moreover, use of different processes and materials may lead to welding of inferior quality and poor mechanical resistance, also as a result of non-uniform structure. In addition, pauses required to change or adapt equipment in use make repair interventions unnecessary time consuming and further increase cost.

### SUMMARY OF THE INVENTION

It is an aim of the present invention to provide a method for repairing blades of gas turbine engines that allows the above limitations to be overcome or at least reduced.

According to the present invention, there is provided a method for repairing a gas turbine engine blade, the blade having an airfoil and an original tip plate arranged to close the airfoil, the method comprising:
removing a tip section of the blade, to such an extent that damaged portions are eliminated, the tip section including the original tip plate;
forming at least one intermediate tip plate, having a thickness lower than a thickness of the original tip plate;
welding the intermediate tip plate to the airfoil; and
building a replacement tip plate from the at least one intermediate tip plate by Laser Metal Deposition using a Laser Metal Deposition head;
wherein welding comprises using the Laser Metal Deposition head.

While power density achieved by the Laser Metal Deposition head would not be normally sufficient to weld the whole replacement tip plate to the airfoil, the thickness of the intermediate tip plate may be selected so that a satisfactory result is anyway achieved. In fact, the laser beam generated by the optical system of a Laser Metal Deposition head is not optimized for the purpose of welding. For example, the focus of a laser beam of a Laser Metal Deposition head is normally much broader than the focus of a laser beam of a laser welding tool. Therefore, the power density is much lower when a a Laser Metal Deposition head is used. Therefore, on the one side it is difficult to reach sufficiently high heat transfer and, on the other side, spreading energy through the structure being welded may lead to increased thermal stress. Instead, use of a dedicated welding head in place of the Laser Metal Deposition head is not necessary according to the invention and the same tool may be exploited both for restoring of the airfoil and for welding the intermediate tip plate. The huge cost of the welding head to be used in a Laser Metal Deposition equipment can thus be avoided, because there is no need for the high power density that would made available. Moreover, the entire repairing process is made faster, since downtime for replacement of the head is not required. Additional reduction of cost is therefore achieved.

Moreover, using the same type of process allows also to use the same material, with identical physical and chemical properties. As a result, a homogeneous final structure may be obtained, to the advantage of quality, mechanical resistance and lifetime.

According to an aspect of the invention, the thickness of the at least one intermediate tip plate is less than 1 mm.

The above specified thickness values of the intermediate I tip plate allow good welding to the airfoil using the Laser Metal Deposition head.

According to an aspect of the invention, forming the at least one intermediate tip plate comprises forming the at least one intermediate tip plate by Laser Metal Deposition.

Laser Metal Deposition is the same manufacturing technique exploited to build the replacement tip plate from the intermediate tip plate. Structural homogeneity may be maintained throughout the building process of the final replacement tip plate from the intermediate tip plate. As a result, the final replacement tip plate is less subject to internal stress which typically occur at discontinuities of the structure and to damages which may derive, such as formation of microcracks. Moreover, the problem of welding different materials, with possible incompatibility, is avoided.

According to an aspect of the invention, forming the at least one intermediate tip plate comprises using the Laser Metal Deposition head.

The whole process is made simpler and less expensive, because a single tool is used to form the intermediate tip plate and to build the replacement tip plate. Downtime to changing the tool my thus be avoided, as well as cost to have different tools available.

According to an aspect of the invention, the replacement tip plate has the same shape as the original tip plate.

According to an aspect of the invention, removing the tip section of the blade comprises removing a tip section of the airfoil, the method further comprising restoring the airfoil by Laser Metal Deposition using the Laser Metal Deposition head.

According to an aspect of the invention, removing the tip section of the blade comprises removing an original squealer tip of the blade, the method further comprising building a replacement squealer tip by Laser Metal Deposition using the Laser Metal Deposition head.

Damages may often extend radially inward of the tip platform into the airfoil. Thus, part of the airfoil is to be removed to clear damages and need be then restored. In any case, the squealer tip is always removed and a replacement squealer tip is to be built. Using the Laser Metal Deposition head contributes to simplify each step individually and the process as a whole and to reduce overall repair time and cost.

According to an aspect of the invention, the method comprises preparing the airfoil to receive the at least one intermediate tip plate and aligning the at least one intermediate tip plate with the airfoil.

According to an aspect of the invention, preparing comprises forming a receiving seat along at least a portion of an inner perimeter of a radially outer surface of the airfoil.

The receiving seat at the radially outer surface of the airfoil helps to keep the intermediate tip plate precisely aligned before starting the welding process. As initial alignment may be critical to the outcome of the step of building the replacement tip plate, the quality of the repair may be improved.

According to an aspect of the invention, forming the receiving seat comprises etching a step along the inner perimeter of the radially outer surface of the airfoil by Electrical Discharge Machining.

The Electrical Discharge Machining allows to define the receiving seat in an extremely precise and reliable manner and may be preferred to Laser Metal Deposition when fine details are to be created. Features of the receiving seat may be optimized to improve coupling with the intermediate tip plate and alignment. For example, fine details, such as rounded edges of the steps or play, may be selected and made as preferred.

According to an aspect of the invention, the at least one intermediate tip plate is configured to engage the receiving seat.

According to an aspect of the invention, the method comprises forming a plurality of intermediate tip plates, wherein preparing comprises forming one receiving seat for each intermediate tip plate and each intermediate tip plate is configured to engage the respective receiving seat.

According to an aspect of the invention, building the replacement tip plate comprises joining the plurality of intermediate tip plates to form a single body.

Depending on the shape of the airfoil and the outline of the radially outer surface thereof, it may be convenient and practical to the build the replacement tip plate from a plurality of intermediate tip plates rather than from a single one. For example, the inside of the airfoil may be divided in compartments and reinforcing structures may be provided at the radially outer surface. Thus, several intermediate tip plates may be made and provided in respective receiving seats as seeds for the process of building the replacement tip plate. As the process goes on, the starting intermediate tip plates may be joined together to for a single replacement tip plate.

According to an aspect of the invention, removing comprises cutting the blade.

### BRIEF DESCRIPTION OF THE DRAWINGS

The present invention will now be described with reference to the accompanying drawings, which show a number of non-limitative embodiments thereof, in which:
- figure 1 is an exploded perspective view of a gas turbine blade in an initial step of a method for repairing blades of gas turbine engines in accordance with an embodiment of the present invention;
- figure 2 is a side view of the blade of figure 1;
- figure 3 is a side view of the blade of figure 1 in an intermediate step of the method of the present invention;
- figure 4 is a perspective view of intermediate components manufactured in a steps of the method of the present invention;
- figure 5 is a side view of one of the components of figure 4 being manufactured;
- figure 6 is a top plan view of the blade of figure 1 in a subsequent step of the method of the present invention;
- figure 7 is a side view of the blade of figure 1 in the configuration of figure 6;
- figure 8 is a perspective view of electrodes used in a step of the method of the present invention;
- figure 9 is a side view of the blade of figure 1 in a subsequent step of the method of the present invention;
- figure 10 is a side view of the blade of figure 1 in a final step of the method of the present invention;
- figure 11 is a side view of a component manufactured in a steps of a method for repairing blades of gas turbine engines in accordance with another embodiment of the present invention;
- figure 12 is a side view of a gas turbine blade in an initial step of the method of the present invention;
- figure 13 is a side view of the blade of figure 12 in a subsequent step of the method of the present invention; and
- figure 14 is a side view of the blade of figure 12 in a final step of the method of the present invention.

### DETAILED DESCRIPTION OF EXEMPLARY EMBODIMENTS

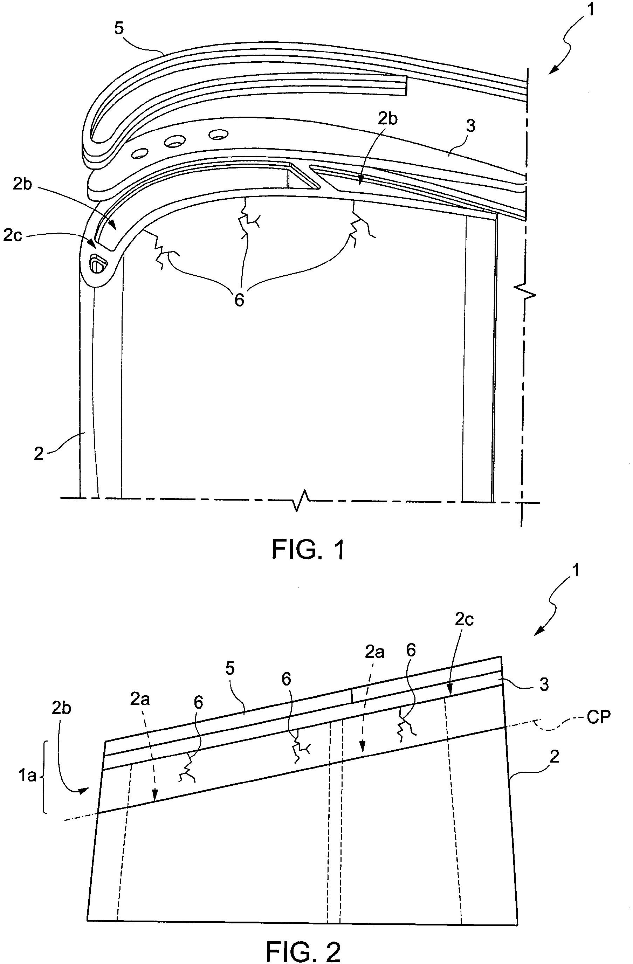

With reference to Figures 1 and 2, a gas turbine blade 1 of a gas turbine engine (not shown) comprises an airfoil 2, a tip plate 3 and a squealer tip 5 at a radially outer end. The expression "radially outer" is to be understood in relation to normal operating configuration of a gas turbine blade, whereby the airfoil extends in a substantially radial direction with respect to a rotation axis and the tip of the blade is defined by the outermost or distal end of the airfoil.

The airfoil 2 is a hollow body internally provided with reinforcement structures (here not shown). The inside of the airfoil 2 may be divided into compartments 2a, in accordance with design preferences, and is closed by the tip plate 3 at the radially outer end. The squealer tip 5 extends radially outward from the tip plate 3 along a part of an edge thereof.

Not only the tip plate 3 and the squealer tip 5 may suffer damages after certain operation time: cracks 6 may be present also in the airfoil 2.

In order to repair damages that extend in the airfoil 2 inward of the plate, a tip section 1a of the blade 1 is removed as illustrated in figure 2, to such an extent that damaged portions are eliminated. Specifically, the tip section 1a of the blade 1 includes the squealer tip 5 and the tip plate 3 and may also include a tip section 2b of the airfoil 2 as in figures 1 and 2, if damages extend to the radially outer portion of the airfoil 2. The removal may be advantageously achieved by cutting the airfoil 2 along a cutting plane CP (figure 1) parallel to a radially outer surface 2c of the airfoil 2 itself. A distance between the cutting plane CP and the radially outer surface 2c is selected such that the damaged portions are included in the removed tip section 2b of the airfoil 2.

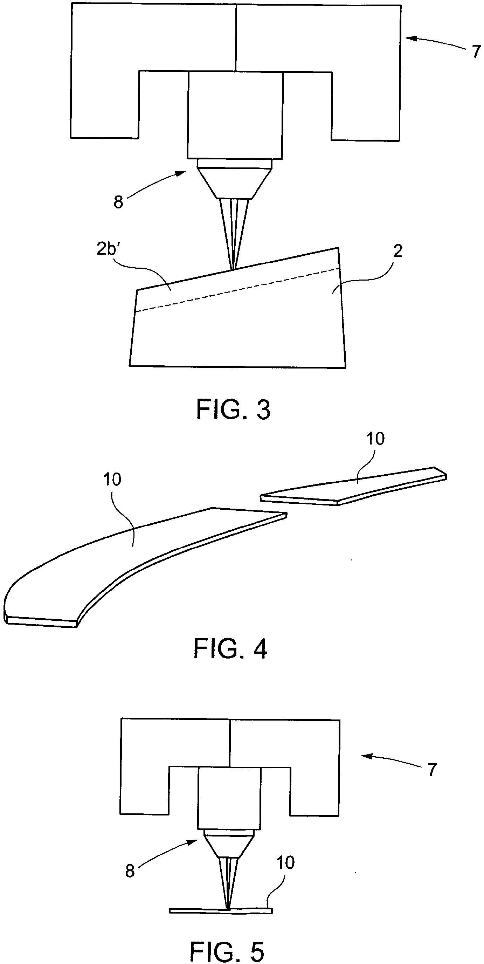

The airfoil 2 is then restored in its original or in a modified configuration by Laser Metal Deposition. To this end a Laser Metal Deposition equipment 7 (figure 3) provided with a Laser Metal Deposition head 8, dedicated to Laser Metal Deposition process, is used. The Laser Metal Deposition head 8 is optimized to dispense and locally melt a solder powder by a laser beam along a deposition path. In particular, power delivered through the laser beam is selected to ensure melting of the solder power, without at the same time dissipating energy in excess of that required for the process of deposition.

A replacement tip section 2b' is thus built in place of the removed tip section 2b. The choice of the original or a modified configuration for the restored tip section 2b of the airfoil 2 may be made in accordance with design preferences. Reinforcing structures as well may be rebuilt in accordance with design preferences.

In one embodiment, damages may be limited to the tip plate 3 and do not extend to the airfoil 2. In this case, removing and restoring the airfoil tip portion 2b is not required.

In order to restore also the tip plate and the squealer tip, at least one intermediate tip plate 10 is initially formed separately from the blade 1, as shown in figure 4. In one embodiment, one intermediate tip plate 10 for each compartment 2a of the airfoil 2 is prepared. In other embodiments not shown, a single intermediate tip plate may be provided.

Each intermediate tip plate 10 may be advantageously built by Laser Metal Deposition using the Laser Metal Deposition equipment 7 with the Laser Metal Deposition head 8 also used to restore the airfoil 2 (figure 5). In other embodiments, intermediate tip plate or plates 10 may be made otherwise, e.g. cast or molded.

Each intermediate tip plate 10 has a thickness lower than a thickness of the original tip plate 3. For example, the thickness of the intermediate tip plates 10 is less than 1 mm.

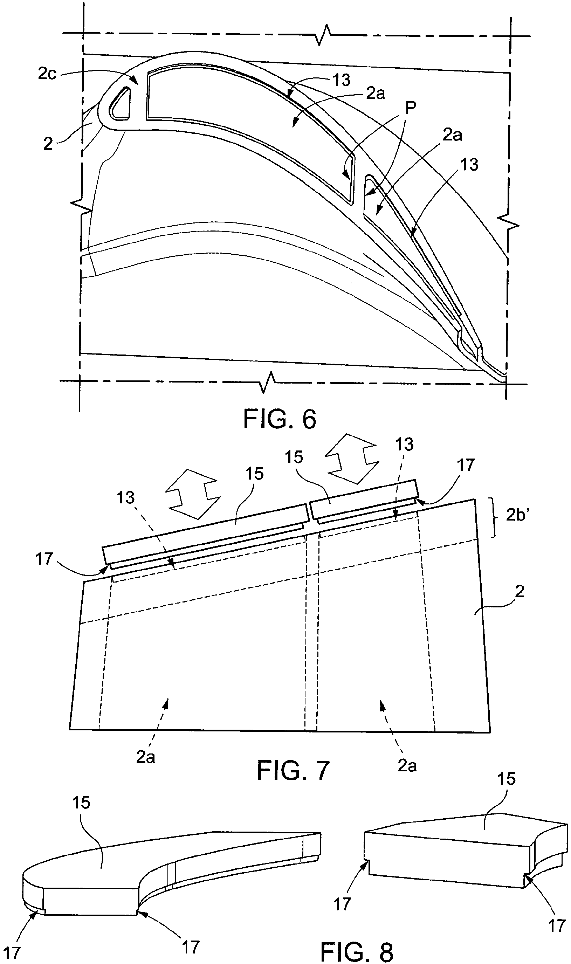

The intermediate tip plates 10 are then welded to the airfoil 2. To this end, a radially outer surface of the airfoil 2 is initially prepared to receive the intermediate tip plates 10, e.g. by mechanical polishing. As alignment of the intermediate tip plates 10 with the airfoil 2 may be critical and correct positioning may go lost especially during early steps of the welding process, when the airfoil 2 is prepared to receive the intermediate tip plates 10 a respective receiving seat 13 for each replacement tip plate 10 is also formed along at least a portion of an inner perimeter P of a radially outer surface of the airfoil 2 (i.e. of the replacement tip section 2b'; figures 6 and 7). The inner perimeter P includes edges of the compartments 2a in one embodiment.

The receiving seats 13 are formed by etching a step along the inner perimeter P of the radially outer surface of the airfoil 2. Etching may be carried out by Electrical Discharge Machining using electrodes 15. Each electrode 15 has the outline of a respective one of the receiving seats 13 and has undercuts 17 along its edges.

The intermediate tip plates 10 are configured to engage respective receiving seats 13 and rest on the steps, possibly with some play. Accordingly, in one embodiment the intermediate tip plates 10 are arranged to close respective compartments 2a of the airfoil 2.

However, the intermediate tip plates 10 may be generally aligned with respective features of the radially outer surface of the airfoil 2, even without forming receiving seats.

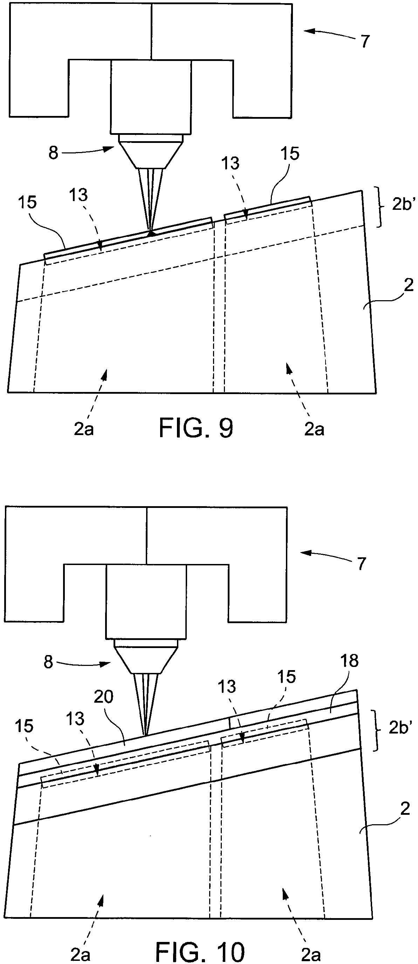

The intermediate tip plates 10 are then placed at respective locations to be welded to the radially outer surface of the airfoil 2, either in respective receiving seats 13 as shown in figure 9 or in alignment with features respective features of the radially outer surface of the airfoil 2.

Due to the small thickness of the intermediate tip plates 10, the Laser Metal Deposition head 8 of the Laser Metal Deposition equipment 7 may be used for the purpose of welding (figure 9). Although the Laser Metal Deposition head 8 is optimized for deposition, in fact, the thickness of the intermediate tip plates 10 may be selected to be so low that power delivered is anyway sufficient to weld the intermediate tip plates 10 to the airfoil 2. Therefore, the Laser Metal Deposition head 8 need not be replaced by a welding head.

Once the intermediate tip plates 10 have been welded to the airfoil 2, the Laser Metal Deposition equipment 7 with the same Laser Metal Deposition head 8 is used to build a replacement tip plate 18 from the intermediate tip plates 10 by Laser Metal Deposition, as illustrated in figure 10. During the process of rebuilding, the intermediate tip plates 10 join to form a single body and are incorporated in the replacement tip plate 18. In one embodiment, the replacement tip plate 18 is built in the same shape as the original tip plate 3 that has been removed. The actual shape of the replacement tip plate 18 may be selected in accordance with design preferences, however.

Then, a replacement squealer tip 20 is built along at least a portion of a perimeter of the replacement tip plate 18. The replacement squealer tip 20 may have the same shape, height (with respect to the radially outer surface of the corresponding tip plate) and length as the original squealer tip 5, but specific features may be selected in accordance with design preferences, e.g. if improvement of performance is expected or using materials with better features in terms of oxidation.

The blade 1 is thus repaired and the original functionality thereof is completely restored.

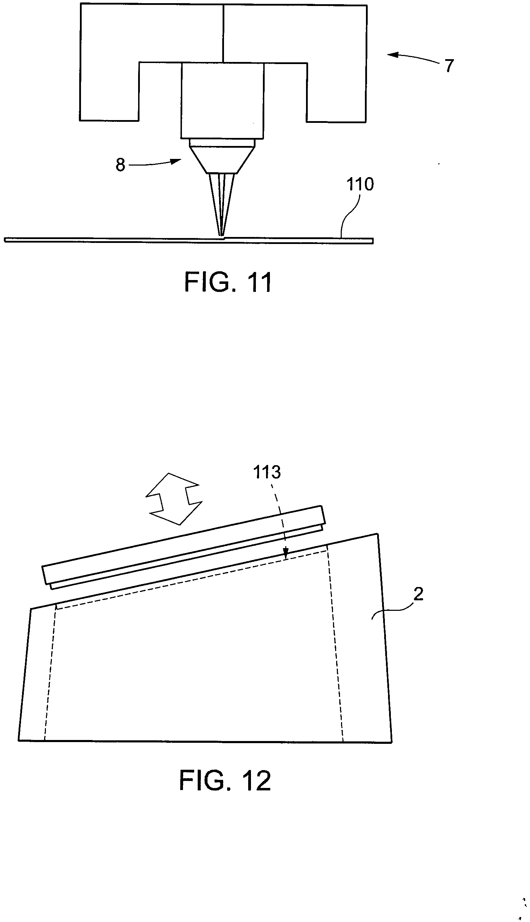

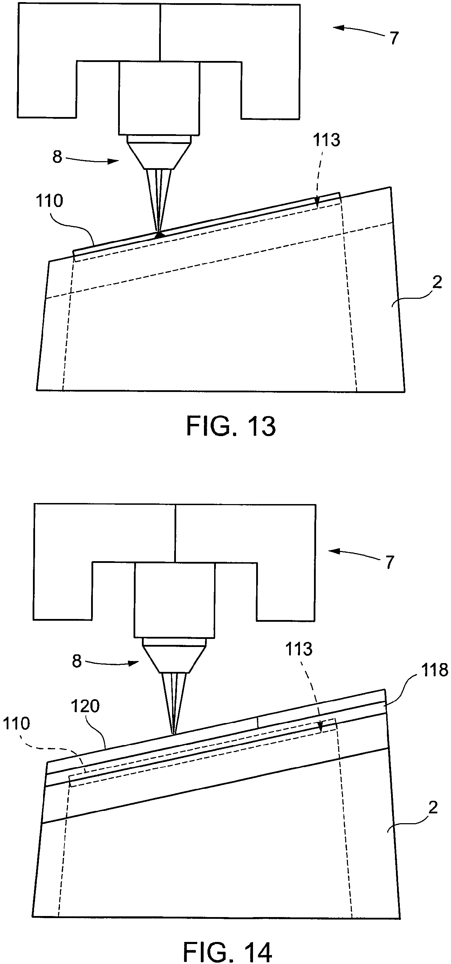

In the embodiment of figures 11-14 a replacement tip plate is rebuilt from a single intermediate tip plate. After having removed a tip portion of the blade and restored, if required, the airfoil 2, as already described, a single intermediate tip plate 110 is formed by Laser Metal Deposition using the Laser Metal Deposition equipment 7 with the Laser Metal Deposition head 8. During preparation of a radially outer surface of the airfoil 2 (figure 12), a step is etched by Electrical Discharge Machining along an inner perimeter of the airfoil 2 itself to define a receiving seat 113. The intermediate tip plate 110 is placed in the receiving seat 113 in correct alignment and is welded to the airfoil 2 using the Laser Metal Deposition equipment 7 with the Laser Metal Deposition head 8.

The method is then completed substantially as already described by building a replacement tip plate 118 from the welded intermediate tip plate 110 by Laser Metal Deposition using the Laser Metal Deposition head 8 and by forming a replacement squealer tip 120.

Finally, it is clear that modifications and variants may be made to the method described herein without departing from the scope of the present invention, as defined in the appended claims.

## Claims

1. A method for repairing a gas turbine engine blade (1), the blade (1) having an airfoil (2) and an original tip plate (3) arranged to close the airfoil (2), the method comprising:
removing a tip section (2b) of the blade (1), to such an extent that damaged portions are eliminated, the tip section (2b) including the original tip plate (3);
forming at least one intermediate tip plate (10; 110), having a thickness lower than a thickness of the original tip plate (3);
welding the intermediate tip plate (10; 110) to the airfoil (2); and
building a replacement tip plate (18: 118) from the at least one intermediate tip plate (10; 110) by Laser Metal Deposition using a Laser Metal Deposition head (8);
wherein welding comprises using the Laser Metal Deposition head (8).

2. The method according to claim 1, wherein the thickness of the at least one intermediate tip plate (10; 110) is less than 1 mm.

3. The method according to claim 1 or 2, wherein forming the at least one intermediate tip plate (10; 110) comprises forming the at least one intermediate tip plate (10; 110) by Laser Metal Deposition.

4. The method according to claim 3, wherein forming the at least one intermediate tip plate (10; 110) comprises using the Laser Metal Deposition head (8).

5. The method according to any one of the preceding claims, wherein the replacement tip plate (18: 118) has the same shape as the original tip plate (3).

6. The method according to any one of the preceding claims, wherein removing the tip section (2b) of the blade (1) comprises removing a tip section of the airfoil (2), the method further comprising restoring the airfoil (2) by Laser Metal Deposition using the Laser Metal Deposition head (8).

7. The method according to according to any one of the preceding claims, wherein removing the tip section (2b) of the blade (1) comprises removing an original squealer tip (5) of the blade (1), the method further comprising building a replacement squealer tip (20; 120) by Laser Metal Deposition using the Laser Metal Deposition head (8).

8. The method according to according to any one of the preceding claims, comprising preparing the airfoil (2) to receive the at least one intermediate tip plate (10; 110) and aligning the at least one intermediate tip plate (10; 110) with the airfoil (2).

9. The method according to claim 8, wherein preparing comprises forming a receiving seat (13; 113) along at least a portion of an inner perimeter of a radially outer surface of the airfoil (2).

10. The method according to claim 9, wherein forming the receiving seat (13; 113) comprises etching a step along the inner perimeter of the radially outer surface of the airfoil (2) by Electrical Discharge Machining.

11. The method according to claim 10, wherein the at least one intermediate tip plate (10; 110) is configured to engage the receiving seat (13; 113).

12. The method according to any one of claims 8 to 11, comprising forming a plurality of intermediate tip plates (10; 110), wherein preparing comprises forming one receiving seat (13; 113) for each intermediate tip plate (10; 110) and each intermediate tip plate (10; 110) is configured to engage the respective receiving seat (13; 113).

13. The method according to claim 12, wherein building the replacement tip plate (18: 118) comprises joining the plurality of intermediate tip plates (10; 110) to form a single body.

14. The method according to any one of the preceding claims, wherein removing comprises cutting the blade (1).
